# EUROPÄISCHE PATENTSCHRIFT

(11) **EP 3 840 170 B1**
(45) Veröffentlichungstag und Bekanntmachung des Hinweises auf die Patenterteilung: **28.01.2026**
(21) Anmeldenummer: 20213673.5
(22) Anmeldetag: 14.12.2020
(51) Int. Cl.: H01M 50/204, H01M 50/296, H01M 50/503, H01M 50/588, H01M 50/597, H02J 7/00

(54) **ENERGIESPEICHERVORRICHTUNG**
ENERGY STORAGE DEVICE
DISPOSITIF ACCUMULATEUR D'ÉNERGIE

(30) Priorität: 19.12.2019 DE 102019220299
(43) Veröffentlichungstag der Anmeldung: 23.06.2021
(73) Patentinhaber: Viessmann Holding International GmbH, 35108 Allendorf (Eder) (DE)
(72) Erfinder: BATTENFELD, Jürgen, 35108 Rennertehausen (DE); KLEE, Hanspeter, 35083 Wetter (DE); HOY, Sébastien, 57350 Spicheren (FR); RIEDL, Wolfgang, 57330 Entrange (FR); BIENIEK, Sebastian, 35066 Frankenberg (DE)
(74) Vertreter: MERH-IP Matias Erny Reichl Hoffmann Patentanwälte PartG mbB

(56) Entgegenhaltungen:
- DE-A1- 102012 020 799
- DE-A1- 102012 223 561
- DE-A1- 102013 011 692

## Beschreibung

Die vorliegende Erfindung betrifft eine Energiespeichervorrichtung mit mehreren verschalteten Energiespeichereinheiten zwecks Speicherung und Bereitstellung elektrischer Energie.

### Hintergrund der Erfindung

Regenerative Energiequellen stellen in der heutigen Zeit eine sinnvolle Alternative zu den konventionellen Energieträgern, wie Kohle, Erdgas oder Erdöl, dar. Hierzu zählen neben Wind- und Wasserkraft auch Sonnenergie, wobei Letzteres beispielsweise durch Photovoltaik-Systeme elektrisch nutzbar gemacht werden kann. Solche Systeme finden sich zunehmend auch in Privathaushalten, um den dortigen Energiebedarf dadurch zumindest teilweise zu decken.

Aufgrund der naturgemäßen Unregelmäßigkeiten in der Leistungsbereitstellung durch regenerative Energiequellen, bedarf es eines Energiespeichersystems, welches Energie speichert und genau dann in Form von elektrischer Energie bereitstellt, wenn diese benötigt wird.

Unterschiedliche Anforderungen an die Energiebereitstellung bedingen dabei flexible Speichervorrichtungen des Systems, die mit möglichst geringem Aufwand in ihrer Speicherkapazität erweitert werden können und ebenso mit möglichst geringem Wartungsaufwand verbunden sind. Daraus ergibt sich ein modularer Aufbau mit einzelnen Energiespeichereinheiten, die in verhältnismäßig kurzer Zeit und weitestgehend unabhängig voneinander aus der Speichervorrichtung entfernt aber auch hinzugefügt werden können; z.B. im Rahmen von Wartungs- und Erneuerungsarbeiten oder im Fall einer Erweiterung der Speicherkapazität.

Beispielsweise ist aus der Offenlegungsschrift DE 10 2017 115 041 A1 ein solch modularer Aufbau in Form eines Hochvoltenergiespeichers mit mehreren Batteriemodulen, die in eine Batterietragestruktur eingebracht werden, bereits bekannt und zielt unter anderem auf eine Positionierung einzelner Batteriemodule unter Einhaltung definierter Abstände ab.

Ferner ist aus der Offenlegungsschrift DE 10 2012 020 799 A1 eine Energiespeichervorrichtung mit einer Mehrzahl von miteinander elektrisch verbindbaren Energiespeichereinheiten bekannt, bei der einzelne Energiespeichereinheiten durch jeweils L-förmig gestaltete Verbindungselementen in Kombination mit einem jeweils dazu passend gestalteten Zellenanschluss einer weiteren Energiespeichereinheit elektrisch miteinander verbunden werden.

Ferner ist aus der Offenlegungsschrift DE 10 2013 011 692 A1 ist eine Energiespeichervorrichtung mit einer Mehrzahl von miteinander elektrisch verbindbaren Energiespeichereinheiten bekannt, die auf einer Bodenplatte angeordnet sind und durch L-förmig gestaltete Verbindungselemente elektrisch miteinander verbunden werden.

Ferner ist aus der Offenlegungsschrift DE 10 2012 223 561 A1 eine Energiespeichervorrichtung mit einer Mehrzahl von miteinander elektrisch verbindbaren Energiespeichereinheiten bekannt, wobei die einzelnen Energiespeichereinheiten durch unterschiedlich gestaltete Stecker von elektrischen Verbindungselementen in Kombination mit jeweils dazu passend gestalteten runden oder eckigen Anschlussöffnungen in den einzelnen Energiespeichereinheiten elektrisch miteinander verbunden werden.

### Zusammenfassung der Erfindung

Eine Aufgabe der Erfindung ist es, eine Energiespeichervorrichtung mit mehreren Energiespeichereinheiten bereitzustellen, bei welcher lediglich die für den funktionsgerechten Betrieb notwendige Verkabelungsvariante der Speichereinheiten möglich ist.

Zur Lösung dieser Aufgabe wird eine Energiespeichervorrichtung nach Anspruch 1 vorgeschlagen. Die abhängigen Ansprüche beziehen sich auf vorteilhafte Ausführungsbeispiele der jeweiligen erfindungsgemäßen Vorrichtung.

Die erfindungsgemäße Energiespeichervorrichtung weist auf: Eine Mehrzahl von Energiespeichereinheiten, die in Aufnahmeplätzen einer Trägereinheit platziert sind und mit elektrischen Verbindungselementen miteinander verbunden sind.

Die Trägereinheit umfasst einen Sockel, an dem mehrere Aufnahmevorrichtungen angebracht sind, die an festgelegten Positionen mit dem Sockel verbunden sind und die jeweils zwei Aufnahmeplätze für die Energiespeichereinheiten umfassen.

Die Konfiguration der Aufnahmeplätze ist derart gestaltet, dass Position und Orientierung der Energiespeichereinheiten bezüglich der Trägereinheit eindeutig festgelegt sind, wobei zwei Energiespeichereinheiten einer einzelnen Aufnahmevorrichtung eine entgegengesetzte Orientierung aufweisen. Weiterhin sind die elektrischen Verbindungselemente als Leitungen vorbestimmter Länge mit entsprechend der Polung der Energiespeichereinheiten angepasstem Anschlussvorrichtungen ausgeführt.

Der Sockel der Trägereinheit ist form- oder kraftschlüssig mit der Umgebung verbindbar

Durch die erfindungsgemäße Energiespeichervorrichtung ist eine zum Kurzschluss führende Verkabelung zuverlässig ausgeschlossen. Das zweistufige Konzept im Sinne des Poka Yoke-Prinzips verhindert aufgrund der Konfiguration der Aufnahmeplätze eine falsche Platzierung der einzelnen Energiespeichereinheiten, sodass diese mit den in vorbestimmter Länge ausgeführten Leitungen lediglich in einer für den vorgesehenen Betrieb zulässigen Weise miteinander verkabelt werden können. Die Platzierung gewährleistet, dass im Sinne der funktionsgerechten Verkabelung zueinander passende Pole der elektrischen Anschlüsse der zu verbindenden Energiespeichereinheiten stets die geringste räumliche Distanz zueinander aufweisen, welche durch die im Rahmen der erfindungsgemäßen Vorrichtung ausgeführten Leitungen vorbestimmter Länge überbrückt werden kann. Daraus folgt, dass eine zum Kurzschluss führende Verkabelung stets Leitungen einer Länge größer als besagter vorbestimmter Länge bedarf, sodass ein solche Verkabelungsvariante ausgeschlossen ist. In Kombination mit einer Ausführung der Leitungen mit polungsspezifischen Anschlussvorrichtungen kann diese Sicherheitsvorkehrung zur Vermeidung einer kurzgeschlossenen Verkabelung weiter ausgebaut werden.

Durch die Ausgestaltung der Trägereinheit als Sockel mit mehreren, an festgelegten Positionen angebrachten Aufnahmevorrichtungen können die von den Aufnahmevorrichtungen aufgenommenen Energiespeichereinheiten in zweckmäßig festgelegten Abständen zueinander platziert werden. Zusätzlich gestattet diese an einem modularen Aufbau orientierte Gestaltungsweise eine einfach gehaltene, begrenzt mögliche Erweiterung der Trägereinheit um zusätzliche Aufnahmeplätze ohne die Notwendigkeit des Austauschs der kompletten Trägereinheit.

Die durch die gegensätzliche Orientierung realisierte Anordnung der Energiespeichereinheiten gestattet eine platzsparende Ausführung, bei der die verbindenden Leitungselemente im Verhältnis zu anderen Anordnungsmöglichkeiten der Energiespeichereinheiten besonders kurz und damit materialsparend ausgelegt werden können.

Dadurch, dass der Sockel der Trägereinheit form- oder kraftschlüssig mit der Umgebung verbindbar ist, kann auf einfache Weise eine fixierende Verbindung zu umgebenden Strukturen hergestellt werden, in welche die Energiespeichervorrichtung integriert oder wieder entfernt werden kann, wodurch der Einsatz der Energiespeichervorrichtung als Bestandteil größerer Systeme erleichtert wird.

Eine vorteilhafte Erweiterung der erfindungsgemäßen Vorrichtung ist durch eine lösbar gehaltene Verbindung der Aufnahmevorrichtungen mit dem Sockel gegeben.

Besonders die zuvor genannte vorteilhafte Möglichkeit der Erweiterung der Trägereinheit um zusätzliche Aufnahmeplätze gestaltet sich durch eine lösbare Verbindung der Aufnahmevorrichtungen zunehmend einfacher. Darüber hinaus können im Falle eines Defekts einzelner Aufnahmevorrichtungen diese ohne größeren Aufwand ausgetauscht werden.

Eine besonders zweckmäßige Ausführung der erfindungsgemäßen Vorrichtung ist durch eine Gestaltung der Aufnahmevorrichtungen als Traversen mit darin hängend platzierten Energiespeichereinheiten gegeben.

Hierdurch ergibt sich unter anderem die Möglichkeit das Eigengewicht der Energiespeichereinheiten für die konstruktive Gestaltung der Aufnahmevorrichtungen und der damit verbundenen Platzierung sinnvoll zu nutzen.

Bei einer bevorzugten Ausführungsform enthält die Trägereinheit bis zu sechs Aufnahmeplätzte für Energiespeichereinheiten.

Durch eine hohe Anzahl an Energiespeichereinheiten kann die Energiespeichervorrichtung durch funktionsgerechte Verschaltung der einzelnen Einheiten eine vergleichsweise hohe Leistung bereitstellen.

Eine weitere vorzugshafte Ausführungsform umfasst Aufnahmevorrichtungen, die durch eine formschlüssig gestaltete Codierung Position und Orientierung der darin platzierten Energiespeichereinheiten eindeutig vorgeben.

Durch diese Ausgestaltung ist eine im Sinne der erfindungsgemäßen Vorrichtung fehlerhafte Platzierung der Energiespeichereinheiten in den Aufnahmevorrichtungen zuverlässig ausgeschlossen, da die Energiespeichereinheiten lediglich in einer vorgegebenen Lage und Orientierung in den jeweiligen Aufnahmeplätzen platziert werden können. Insbesondere in Kombinationen mit der Ausführungsform einer hängend gestalteten Platzierung von zwei Energiespeichern mit gegensätzlicher Orientierung, kann so eine eindeutige, platzsparende, modular aufgebaute und damit vorteilhafte Anordnung der Energiespeichereinheiten erzielt werden, welche in Zusammenspiel mit den Leitungen vorbestimmter Länge keine zum Kurzschluss führende Verkabelung zulässt.

Eine weitere bevorzugte Ausführungsform der erfindungsgemäßen Vorrichtung umfasst lösbar gestaltete Verbindung zwischen den Energiespeichereinheiten und den Aufnahmevorrichtungen.

Hierdurch lassen sich mit verhältnismäßig geringem Aufwand einzelne Energiespeichereinheiten aus den Aufnahmevorrichtungen entfernen bzw. hinzufügen. Besonders vorteilhaft gestaltet sich dies in Kombination mit der Ausführung einer durch Traversen realisierten hängenden Platzierung und formschlüssig codierten Aufnahmeplätzen, da sich bei vorteilhafter Ausnutzung dieser Merkmale eine eindeutige und lösbare Verbindung realisieren lässt, bei welcher keine zusätzlichen Fixierungsmaßnahmen der einzelnen Energiespeichereinheiten benötigt werden.

In einer vorteilhaften Ausgestaltung handelt es sich bei den einzelnen Energiespeichereinheiten um Batteriemodule.

Hierdurch wird eine Abgabe aber auch Speicherung der Energie in möglichst effizienter Weise auf elektrochemischer Basis ermöglicht.

In einer bevorzugten Ausgestaltung sind die einzelnen Energiespeichereinheiten der Energiespeichervorrichtung durch Leitungen elektrisch in Reihe miteinander verschaltet.

Hierdurch werden die als Spannungsquelle dienenden Energiespeichereinheiten in einer für den vorgesehenen Betrieb sinnvollen Weise miteinander verschaltet.

Bei einer bevorzugten Ausgestaltung der erfindungsgemäßen Vorrichtung sind ein oder mehrere durch die Anschlussvorrichtungen hergestellten Verbindungen zwischen Leitungen und Energiespeichereinheiten lösbar gestaltet.

Insbesondere in Kombination mit einer vorteilhaften Ausführung der Anschlussvorrichtungen als MC4-Steckverbindungen können dadurch die elektrischen Verbindungen zwischen einzelnen Energiespeichereinheiten mit verhältnismäßig geringem Aufwand hergestellt bzw. gelöst werden. Besonders im Zusammenspiel mit der Ausführung einer lösbar gestalteten Verbindung zwischen den Aufnahmevorrichtungen und den Energiespeichereinheiten wird hierdurch ein einfaches Hinzufügen bzw. Entfernen einzelner Energiespeichereinheiten aus der Energiespeichervorrichtung mit verhältnismäßig geringem Aufwand ermöglicht.

Eine besonders zweckmäßige Weiterbildung der erfindungsmäßigen Vorrichtung ist durch die Integration in ein Energieversorgungssystem gegeben, welches zusätzlich eine Kraft-Wärme-Kopplungs- und/oder eine Photovoltaik-Anlage umfasst.

Hierdurch ergibt sich eine für den Einsatz der erfindungsgemäßen Vorrichtung sinnvolle Anbindung an energiegewinnende Anlagen, deren aus regenerativen Quellen gewonnene Energie von der Energiespeichervorrichtung gespeichert werden kann und im Bedarfsfall einem Verbraucher in Form elektrischer Energie zur Verfügung gestellt werden kann.

### Kurzbeschreibung der Figuren

- Figur 1: zeigt schematisch eine Ausführungsform der Energiespeichervorrichtung mit vier Energiespeichereinheiten in einer räumlich dreidimensionalen Darstellungsvariante.
- Figur 2: zeigt schematisch eine Ausführungsform der Energiespeichervorrichtung mit vier Energiespeichereinheiten in einer detaillierteren Seitenansicht.

### Detaillierte Beschreibung der Figuren und bevorzugter Ausführungsbeispiele der vorliegenden Erfindung

Im Folgenden werden Ausführungsbeispiele der vorliegenden Erfindung unter Zuhilfenahme der beigefügten Figuren beschreiben. Gleiche bzw. ähnliche Elemente in den Figuren können hierbei mit gleichen Bezugszeichen bezeichnet sein, manchmal allerdings auch mit unterschiedlichen Bezugszeichen.

Es wird hervorgehoben, dass die vorliegende Erfindung in keiner Weise auf die nachfolgend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer Merkmale der beschriebenen Beispiele im Rahmen des Schutzumfanges der unabhängigen Ansprüche umfasst sind.

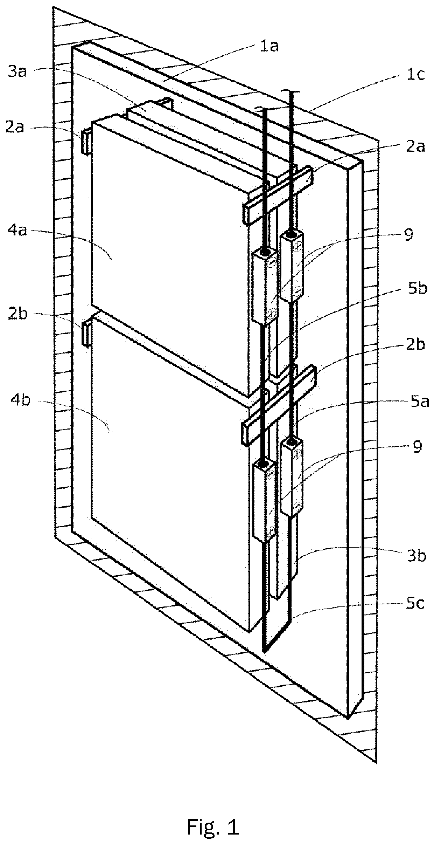

Figur 1 zeigt schematisch eine Ausführungsform der erfindungsgemäßen Energiespeichervorrichtung in einer räumlich, dreidimensionalen Darstellungsvariante mit einer hängend gestalteten Aufnahme der Energiespeichereinheiten.

Die Vorrichtung umfasst eine Trägereinheit, bestehend aus einem an einer Wand 1c angebrachten Sockel 1a und daran befestigten, als Traversen gestalteten Aufnahmevorrichtungen 2a, 2b, die Aufnahmeplätze für Energiespeichereinheiten 3a, 4a und 3b, 4b enthalten. In der dargestellten Ausführungsform sind pro Aufnahmevorrichtung jeweils zwei Energiespeichereinheiten in gegensätzlicher Orientierung eindeutig platziert, was in Figur 1 exemplarische durch die Lage der Pole der elektrischen Anschlüsse 9 der einzelnen Energiespeichereinheiten gezeigt ist. Die Energiespeichereinheiten 3a und 3b sind über eine Leitung 5a mit vorbestimmter Länge und entsprechend der Polung angepassten Anschlussvorrichtungen elektrisch in Reihe miteinander verschaltet. Entsprechendes gilt für die elektrische Verbindung der Energiespeichereinheiten 4a und 4b durch eine Leitung 5b.

Das Merkmal der vorbestimmten Länge der Leitungen 5a und 5b verhindert dabei in Zusammenspiel mit der durch die Aufnahmevorrichtungen vorgegebenen Position und Orientierung der einzelnen Energiespeichereinheiten zuverlässig eine zum Kurzschluss der einzelnen Energiespeichereinheiten führende Verkabelung. In der dargestellten Ausführungsform besteht beispielsweise keine Möglichkeit, die elektrischen Pole der Energiespeichereinheiten 3b und 4a durch eine der Leitungen 5a, 5b oder 5c, welche sich durch ihre vorbestimmte Länge auszeichnen, elektrisch miteinander zu verbinden, da die Leitungen derart gestaltet sind, dass diese nicht die dafür nötige Länge aufweisen. Gleiches gilt für eine Verkabelung der Speichereinheiten 3a und 4b. Zwecks einer elektrischen Verbindung in Form einer Reihenschaltung aller in der Energiespeichervorrichtung platzierten Energiespeichereinheiten sind in der dargestellten Ausführungsform die Einheiten 3b und 4b weiterhin durch eine Leitung 5c elektrisch miteinander verschaltet.

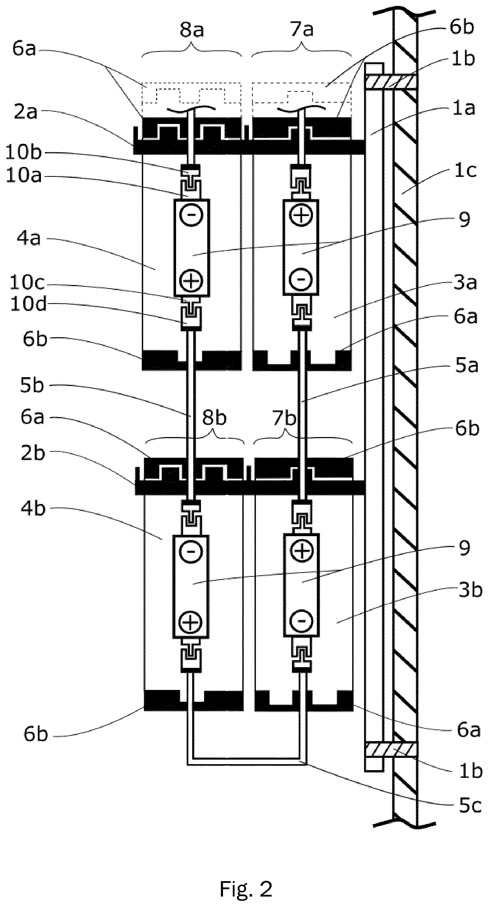

Figur 2 zeigt schematisch eine Ausführungsform der erfindungsgemäßen Energiespeichervorrichtung in einer zu Figur 1 passenden Seitenansicht. Zentraler Aspekt dieser Darstellung ist die Veranschaulichung einer möglichen Ausgestaltung der formschlüssig codierten Aufnahmeplätze zur Vorgabe einer eindeutigen Position und Orientierung der darin platzierten Energiespeichereinheiten.

In der gegebenen Darstellung sind and dem über Verbindungselemente 1b mit der Wand 1c verbundenen Sockel 1a, als Traversen gestaltete Aufnahmevorrichtungen 2a und 2b befestigt. Die Aufnahmevorrichtungen 2a und 2b sind dabei in ähnlicher Weise gestaltet und stellen jeweils zwei Aufnahmeplätze 7a und 8a bzw. 7b und 8b für Energiespeichereinheiten bereit. Die formtechnische Ausprägung einer solchen Aufnahmevorrichtung unterscheidet sich dabei für die beiden Aufnahmeplätze, sodass lediglich ein jeweils dazu passendes, formschlüssig gestaltetes Gegenstück 6a oder 6b funktionsgerecht aufgenommen werden kann. Eine durch diese formschlüssig gestaltetet Ausführung erzielte, unterschiedliche Codierung der einzelnen Aufnahmeplätze 7a und 8a bzw. 7b und 8b dient der eindeutigen Vorgabe von Position und Orientierung der darin platzierten Energiespeichereinheiten.

In der in Figur 2 dargestellten Ausführungsform passt beispielsweise zu den Aufnahmeplätzen 7a und 7b der Aufnahmevorrichtungen 2a bzw. 2b lediglich das formtechnisch gestaltete Gegenstück 6b. Gleiches gilt für die Aufnahmeplätze 8a und 8b mit dem dazu passenden Gegenstück 6a.

Jede Energiespeichereinheit weist dabei sowohl ein Gegenstück 6a als auch 6b auf, deren Position sich an der Lage der Pole der elektrischen Anschlüsse 9 orientiert und für alle Energiespeichereinheiten übereinstimmt. So liegen in der in Figur 2 dargestellten Ausführung die Gegenstücke 6a stets auf Seiten des negativen elektrischen Pols und die Gegenstücke 6b auf Seiten des positiven Pols der einzelnen Energiespeichereinheiten.

Die hierdurch erzielte formschlüssig gestaltete Codierung der einzelnen Aufnahmeplätze bedingt, dass in der dargestellten Ausführungsform beispielsweise die Energiespeichereinheit 3a lediglich in der abgebildeten Orientierung in Aufnahmeplatz 7a der Aufnahmevorrichtung 2a platziert werden kann. Gleiches gilt unter anderem für die Orientierung der in Aufnahmeplatz 8a platzierten Energiespeichereinheit 4a. Die Orientierungen der einzelnen Energiespeichereinheiten werden in der gewählten Darstellung durch die Orientierungen bzw. Lager der Pole der elektrischen Anschlüsse 9 veranschaulicht.

Die in der Energiespeichervorrichtung vorhandenen Energiespeichereinheiten sind durch elektrische Leitungen 5a, 5b, 5c gleicher Ausführung miteinander in Reihe verschaltet. Gemäß der bzgl. Figur 1 geschilderten Verkabelungsvariante zeigt auch Figur 2, dass durch das Merkmal der vorbestimmten Länge der Leitungen keine zum Kurzschluss führende Verkabelung möglich ist.

In der gemäß Figur 2 gegebenen Ausführungsform wird eine kurzgeschlossene Verkabelung zusätzlich durch den Einsatz polungsspezifischer Anschlussvorrichtungen zuverlässig verhindert. Es handelt sich hierbei um lösbar gestaltete MC4-Steckverbindungen mit an den elektrischen Anschlüssen der Energiespeichereinheiten angebrachten MC4-Einbaubuchsen 10a und 10c sowie dazu passenden MC4-Steckern 10b und 10d an den einzelnen Leitungen. Die polungsspezifisch unterschiedliche Ausgestaltung der Einbaubuchsen bedingt dabei, dass eine elektrische Verbindung lediglich durch den zur Buchse 10a passenden MC4-Stecker 10b bzw. durch den zu Buchse 10c passenden MC4-Stecker 10d hergestellt werden kann.

In der in Figur 2 gegebenen Ausführung finden sich die Einbaubuchsen 10a stets am negativen Pol und die Einbaubuchsen 10c stets am positiven Pol der elektrischen Anschlüsse der Energiespeichereinheiten und die Leitungen 5a,5b, 5c weisen jeweils an ihren Enden einen Stecker 10b sowie 10d auf.

### Bezugszeichen

- 1a: Sockel
- 1b: Verbindungselement zwischen Sockel und Wand
- 1c: Wand
- 2a, 2b: Aufnahmevorrichtungen/Traversen mit Codierungen
- 3a, 3b, 4a, 4b: Energiespeichereinheiten
- 5a, 5b, 5c: Leitungen
- 6a, 6b: Gegenstücke an den Energiespeichereinheiten für formschlüssige Codierung
- 7a, 7b, 8a, 8b: Aufnahmeplätze
- 9: elektrische Anschlüsse der Energiespeichereinheit
- 10a: MC4-Einbaubuchse (negativer Pol)
- 10b: MC4-Stecker (passend zu 10a)
- 10c: MC4-Einbaubuchse (positiver Pol)
- 10d: MC4-Stecker (passend zu 10b)

## Patentansprüche

1. Energiespeichervorrichtung mit einer Mehrzahl von Energiespeichereinheiten (3a, 4a, 3b, 4b), die in Aufnahmeplätzen (7a, 8a, 7b, 8b) einer Trägereinheit platziert und mittels elektrischer Verbindungselemente vorbestimmter Länge miteinander verbunden sind, dergestalt, dass eine zur Verpolung und/oder zum Kurzschluss führende Verkabelung der Energiespeichereinheiten (3a, 4a, 3b, 4b) ausgeschlossen ist,
dass die Trägereinheit einen Sockel (1a) und mehrere Aufnahmevorrichtungen (2a, 2b) umfasst, die an festgelegten Positionen mit dem Sockel (1a) verbunden sind und jeweils zwei Aufnahmeplätze (7a, 8a, 7b, 8b) für Energiespeichereinheiten (3a, 4a, 3b, 4b) umfassen,
der Sockel (1a) der Trägereinheit form- und/oder kraftschlüssig mit einer Umgebung (1c) der Energiespeichervorrichtung verbindbar ist,
die Konfiguration der Aufnahmeplätze (7a, 8a, 7b, 8b) Position und Orientierung der Energiespeichereinheiten (3a, 4a, 3b, 4b) bezüglich der Trägereinheit eindeutig festlegt,
wobei zwei Energiespeichereinheiten (3a, 4a, 3b, 4b) einer einzelnen Aufnahmevorrichtung (2a; 2b) eine entgegengesetzte Orientierung aufweisen,
und die elektrischen Verbindungselemente als Leitungen (5a, 5b, 5c) mit entsprechend der Polung der Energiespeichereinheiten angepassten Anschlussvorrichtungen (10a, 10b, 10c, 10d) ausgeführt sind.

2. Energiespeichervorrichtung nach Anspruch 1, wobei die Aufnahmevorrichtungen (2a, 2b) der Trägereinheit lösbar mit dem Sockel (1a) verbunden sind.

3. Energiespeichervorrichtung nach Anspruch 1 oder 2, wobei die Aufnahmevorrichtungen (2a, 2b) als Traversen ausgeführt sind, in welchen die Energiespeichereinheiten (3a, 4a, 3b, 4b) hängend platziert sind.

4. Energiespeichervorrichtung nach Anspruch 3, wobei die Trägereinheit bis zu sechs Aufnahmeplätze (7a, 7b, 8a, 8b) für Energiespeichereinheiten (3a, 3b, 4a, 4b) enthält.

5. Energiespeichervorrichtung nach Anspruch 3 oder 4, wobei Position und Orientierung der Energiespeichereinheiten (3a, 4a, 3b, 4b) bzgl. der Aufnahmevorrichtungen (2a, 2b) durch eine auf diese angepasste, formschlüssige Codierung eindeutig vorgegeben sind.

6. Energiespeichervorrichtung nach Anspruch 5, wobei die Energiespeichereinheiten (3a, 4a, 3b, 4b) lösbar mit den Aufnahmevorrichtungen (2a, 2b) verbunden sind.

7. Energiespeichervorrichtung nach Anspruch 5 oder 6, wobei die Energiespeichereinheiten (3a, 4a, 3b, 4b) Batteriemodule sind.

8. Energiespeichervorrichtung nach Anspruch 7, wobei die Energiespeichereinheiten (3a, 4a, 3b, 4b) durch die Leitungen (5a, 5b, 5c) elektrisch in Reihe miteinander verschaltet sind.

9. Energiespeichervorrichtung nach Anspruch 8, wobei ein oder mehrere durch die Anschlussvorrichtungen hergestellten Verbindungen zwischen Leitungen (5a, 5b, 5c) und Energiespeichereinheiten (3a, 4a, 3b, 4b) lösbar gestaltet sind.

10. Energiespeichervorrichtung nach Anspruch 9, wobei die Anschlussvorrichtungen als MC4-Steckverbindungen mit MC4-Einbaubuchsen (10a, 10c) und MC4-Steckern (10b, 10d) ausgeführt sind.

11. Ein Energieversorgungssystem, das eine Kraft-Wärme-Kopplungs- und/oder Photovoltaik-Anlage sowie ein Energiespeichervorrichtung nach einem der Ansprüche 1 bis 10 umfasst.

## Claims

1. Energy storage device having a plurality of energy storage units (3a, 4a, 3b, 4b) which are placed in receiving locations (7a, 8a, 7b, 8b) of a carrier unit and are connected to one another by means of electrical connecting elements of predetermined length, in such a way that cabling of the energy storage units (3a, 4a, 3b, 4b) which leads to polarity reversal and/or to a short circuit is ruled out, in that the carrier unit comprises a base (1a) and a plurality of receiving devices (2a, 2b) which are connected to the base (1a) at fixed positions and each comprise two receiving locations (7a, 8a, 7b, 8b) for energy storage units (3a, 4a, 3b, 4b), the base (1a) of the carrier unit can be connected to an environment (1c) of the energy storage device in a form-fitting and/or force-fitting manner,
the configuration of the receiving locations (7a, 8a, 7b, 8b) uniquely fixes the position and orientation of the energy storage units (3a, 4a, 3b, 4b) with respect to the carrier unit,
wherein two energy storage units (3a, 4a, 3b, 4b) of an individual receiving device (2a; 2b) have an opposite orientation,
and the electrical connecting elements are designed as lines (5a, 5b, 5c) with connection devices (10a, 10b, 10c, 10d) which are adapted in accordance with the polarity reversal of the energy storage units.

2. Energy storage device according to Claim 1, wherein the receiving devices (2a, 2b) of the carrier unit are connected releasably to the base (1a).

3. Energy storage device according to Claim 1 or 2, wherein the receiving devices (2a, 2b) are designed as traverses in which the energy storage units (3a, 4a, 3b, 4b) are placed in a suspended manner.

4. Energy storage device according to Claim 3, wherein the carrier unit contains up to six receiving locations (7a, 7b, 8a, 8b) for energy storage units (3a, 3b, 4a, 4b).

5. Energy storage device according to Claim 3 or 4, wherein the position and orientation of the energy storage units (3a, 4a, 3b, 4b) with respect to the receiving devices (2a, 2b) are uniquely predefined by a positively locking coding which is adapted thereto.

6. Energy storage device according to Claim 5, wherein the energy storage units (3a, 4a, 3b, 4b) are connected releasably to the receiving devices (2a, 2b).

7. Energy storage device according to Claim 5 or 6, wherein the energy storage units (3a, 4a, 3b, 4b) are battery modules.

8. Energy storage device according to Claim 7, wherein the energy storage units (3a, 4a, 3b, 4b) are electrically connected to one another in series by the lines (5a, 5b, 5c).

9. Energy storage device according to Claim 8, wherein one or more connections produced by the connection devices between lines (5a, 5b, 5c) and energy storage units (3a, 4a, 3b, 4b) are designed to be releasable.

10. Energy storage device according to Claim 9, wherein the connection devices are designed as MC4 plug connections with MC4 installation sockets (10a, 10c) and MC4 plugs (10b, 10d).

11. Energy supply system which comprises a combined heat and power and/or photovoltaic system and an energy storage device according to one of Claims 1 to 10.

## Revendications

1. Dispositif d'accumulation d'énergie comprenant une pluralité d'unités d'accumulation d'énergie (3a, 4a, 3b, 4b) qui sont placées dans des emplacements de réception (7a, 8a, 7b, 8b) d'une unité de support et qui sont reliées les unes aux autres au moyen d'éléments de liaison électrique de longueur prédéterminée, de telle sorte qu'un câblage des unités d'accumulation d'énergie (3a, 4a, 3b, 4b) conduisant à une polarité et/ou à un court-circuit soit exclu, que l'unité de support comprenne un socle (1a) et plusieurs dispositifs de réception (2a, 2b) qui sont reliés au socle (1a) à des positions fixées et qui comprennent à chaque fois deux emplacements de réception (7a, 8a, 7b, 8b) pour des unités d'accumulation d'énergie (3a, 4a, 3b, 4b),
**caractérisé en ce que** le socle (1a) de l'unité de support peut être relié par complémentarité de forme et/ou de force à un environnement (1c) du dispositif d'accumulation d'énergie,
la configuration des emplacements de réception (7a, 8a, 7b, 8b) fixe de manière univoque la position et l'orientation des unités d'accumulation d'énergie (3a, 4a, 3b, 4b) par rapport à l'unité de support,
deux unités d'accumulation d'énergie (3a, 4a, 3b, 4b) d'un dispositif de réception individuel (2a ; 2b) présentant une orientation opposée,
et les éléments de liaison électrique étant réalisés sous forme de lignes (5a, 5b, 5c) avec des dispositifs de raccordement (10a, 10b, 10c, 10d) adaptés en fonction de la polarité des unités d'accumulation d'énergie.

2. Dispositif d'accumulation d'énergie selon la revendication 1, les dispositifs de réception (2a, 2b) de l'unité de support étant reliés de manière amovible au socle (1a).

3. Dispositif d'accumulation d'énergie selon la revendication 1 ou 2, les dispositifs de réception (2a, 2b) étant réalisés sous forme de traverses dans lesquelles les unités d'accumulation d'énergie (3a, 4a, 3b, 4b) sont placées de manière suspendue.

4. Dispositif d'accumulation d'énergie selon la revendication 3, l'unité de support contenant jusqu'à six emplacements de réception (7a, 7b, 8a, 8b) pour des unités d'accumulation d'énergie (3a, 3b, 4a, 4b).

5. Dispositif d'accumulation d'énergie selon la revendication 3 ou 4, la position et l'orientation des unités d'accumulation d'énergie (3a, 4a, 3b, 4b) par rapport aux dispositifs de réception (2a, 2b) étant prédéfinies de manière univoque par un codage par complémentarité de forme adapté à ceux-ci.

6. Dispositif d'accumulation d'énergie selon la revendication 5, les unités d'accumulation d'énergie (3a, 4a, 3b, 4b) étant reliées de manière amovible aux dispositifs de réception (2a, 2b).

7. Dispositif d'accumulation d'énergie selon la revendication 5 ou 6, les unités d'accumulation d'énergie (3a, 4a, 3b, 4b) étant des modules de batterie.

8. Dispositif d'accumulation d'énergie selon la revendication 7, les unités d'accumulation d'énergie (3a, 4a, 3b, 4b) étant connectées électriquement les unes aux autres en série par les lignes (5a, 5b, 5c).

9. Dispositif d'accumulation d'énergie selon la revendication 8, une ou plusieurs liaisons établies par les dispositifs de raccordement entre des lignes (5a, 5b, 5c) et des unités d'accumulation d'énergie (3a, 4a, 3b, 4b) étant réalisées de manière amovible.

10. Dispositif d'accumulation d'énergie selon la revendication 9, les dispositifs de raccordement étant réalisés sous forme de connexions enfichables MC4 avec des prises encastrées MC4 (10a, 10c) et des fiches MC4 (10b, 10d).

11. Système d'alimentation en énergie qui comprend une installation de cogénération et/ou photovoltaïque ainsi qu'un dispositif d'accumulation d'énergie selon l'une quelconque des revendications 1 à 10.
